# FASCICULE DE BREVET EUROPEEN

(11) **EP 4 248 012 B1**
(45) Date de publication et mention de la délivrance du brevet: **01.01.2025**
(21) Numéro de dépôt: 21823640.4
(22) Date de dépôt: 22.11.2021
(51) Int. Cl.: D21C 11/00, C10J 3/00

(54) **PROCEDE DE GAZEIFICATION D'UNE LIQUEUR NOIRE**
VERFAHREN ZUR VERGASUNG EINER SCHWARZLAUGE
METHOD FOR THE GASIFICATION OF A BLACK LIQUOR

(30) Priorité: 23.11.2020 FR 2012022
(43) Date de publication de la demande: 27.09.2023
(73) Titulaire: Commissariat à l'Energie Atomique et aux Energies Alternatives, 75015 Paris (FR)
(72) Inventeur: HAARLEMMER, Geert, 38054 GRENOBLE CEDEX 09 (FR)
(74) Mandataire: Brevalex
(86) Numéro de dépôt international: PCT/FR2021/052055
(87) Numéro de publication internationale: WO 2022/106794

(56) Documents cités:
- JP-B2- 4 105 171
- NAQVI M ET AL: "Bio-refinery system of DME or CH"4 production from black liquor gasification in pulp mills", BIORESOURCE TECHNOLOGY, ELSEVIER, AMSTERDAM, NL, vol. 101, no. 3, 1 February 2010 (2010-02-01), pages 937 - 944, XP026698598, ISSN: 0960-8524, [retrieved on 20090919], DOI: 10.1016/J.BIORTECH.2009.08.086
- DE BLASIO CATALDO ET AL: "A study on supercritical water gasification of black liquor conducted in stainless steel and nickel-chromium-molybdenum reactors : A study on supercritical water gasification", JOURNAL OF CHEMICAL TECHNOLOGY AND BIOTECHNOLOGY, vol. 91, no. 10, 9 February 2016 (2016-02-09), pages 2664 - 2678, XP055829294, ISSN: 0268-2575, DOI: 10.1002/jctb.4871
- SRICHAROENCHAIKUL ET AL: "Assessment of black liquor gasification in supercritical water", BIORESOURCE TECHNOLOGY, ELSEVIER, AMSTERDAM, NL, vol. 100, no. 2, 1 January 2009 (2009-01-01), pages 638 - 643, XP025535040, ISSN: 0960-8524, [retrieved on 20080831], DOI: 10.1016/J.BIORTECH.2008.07.011

## Description

### DOMAINE TECHNIQUE

La présente invention se rapporte au domaine de la transformation des liqueurs noires.

L'invention est particulièrement intéressante puisqu'elle permet de valoriser le carbone sous forme de méthane et de récupérer le soufre en phase aqueuse.

Elle trouve des applications, non seulement, dans les usines de pâte à papier, mais aussi pour les filières dites 'Power to Gaz'

### ÉTAT DE LA TECHNIQUE ANTÉRIEURE

Dans les contextes actuels de développement durable, il est essentiel de pouvoir valoriser les résidus organiques de l'industrie papetière et, plus particulièrement, la liqueur noire.

La liqueur noire provient de la préparation de la pâte à papier. Elle résulte de la séparation de la cellulose (pâte à papier) du reste du bois (pulpe de bois). La liqueur noire contient la lignine et l'hémicellulose et présente une forte teneur énergétique.

Généralement, la liqueur noire obtenue est ensuite brulée dans une chaudière de récupération (appelée chaudière Tomlinson) non seulement pour produire de la chaleur mais aussi pour détruire la fraction organique et pour récupérer les produits chimiques de cuisson, le sodium et le soufre.

Cependant, cette chaudière présente plusieurs inconvénients : d'une part son coût et sa complexité, et d'autre part le dioxyde de carbone et le soufre sont transformés en oxyde de soufre et en sulfate, difficilement valorisables.

Autrement, il est possible de remplacer la chaudière de récupération par un gazéifieur en eau supercritique pour gazéifier la liqueur noire, plutôt que de la bruler. Il est alors possible de récupérer une partie du carbone sous forme de méthane ou de syngaz pour produire des carburants.

Mais la gazéification à des températures peu élevées (typiquement de l'ordre de 500-600°C) conduit à une faible conversion et produit beaucoup de méthane. Des températures plus élevées améliore le rendement de la conversion mais la production d'hydrogène et de CO₂ est également favorisée [1].

Dans ce cas, il est possible d'utiliser en plus des réacteurs de méthanation pour faire réagir le CO₂ (ou le CO) produit lors de la gazéification avec de l'hydrogène pour obtenir du méthane selon la réaction suivante :

CO₂ + 4H₂ → CH₄ + 2H₂O

Cette réaction peut être catalysée par des catalyseurs à base de nickel ou de ruthénium à des températures de 300-400°C [2].

Cependant, de tels catalyseurs sont sensibles aux polluants, et notamment au soufre, et se désactivent facilement dans les conditions supercritique [3]. Afin de remédier à cet inconvénient, une solution consiste à utiliser les catalyseurs en présence d'un gaz purifié, mais cela complique le procédé.

De plus, la gazéification en eau super critique est endothermique. Une certaine quantité de chaleur doit donc souvent être apportée, par exemple avec des colliers chauffants positionnés à l'extérieur du réacteur de gazéification. Ce mode de chauffage limite la quantité de CO₂ produit et augmente les rendements. Cependant, quand la capacité du réacteur devient trop importante, ce mode de chauffage devient compliqué.

Autrement, il est possible d'ajouter un oxydant (mode auto-thermique) pour fournir de la chaleur, mais ceci consomme une partie de la ressource et produit du CO₂ supplémentaire, baissant le rendement en gaz de synthèse [4].

Finalement, au moment du refroidissement, l'eau se condense et les gaz H₂S et CO₂ forment un équilibre dans la phase aqueuse. Le soufre est alors réparti entre H₂S, NaHS et le Na₂S. Or, H₂S est un gaz toxique ; sa présence nécessite donc une étape supplémentaire de purification et de réinjection dans le cycle de l'usine à pâte à papier. Le CO₂ est reparti entre CO₂, H₂CO₃, NaHCO₃ et Na₂CO₃. La répartition entre ces produits dépend notamment du pH, de la température et du rapport entre les deux gaz CO₂ et H₂S. Dans un réacteur, chauffé électriquement depuis l'extérieur, environ 50% du soufre reste dans la phase aqueuse sous forme d'ions sulfures S²⁻ ou d'ions hydrogénosulfures HS⁻. En mode auto-thermique, seulement 30% du soufre reste dans la phase aqueuse.

Le brevet JP 4 105171 B2 décrit un procédé pour transformer de la liqueur noire en gaz de synthèse contenant du méthane et de l'hydrogène. La liqueur noire est gazéifiée en eau supercritique en présence d'un catalyseur alcalin et transformée en un gaz de synthèse comprenant essentiellement de l'hydrogène, du méthane et du dioxyde de carbone.

Naqvi et al, 2010 (Bioresource Technology, vol. 101, pages 937-944) proposent, pour favoriser la production de méthane à partir de la gazéification de la liqueur noire en eau supercritique, d'utiliser des catalyseurs tels que le ruthénium, le charbon activé issu de noix de coco ou de catalyseurs à base de nickel.

Blasio Cataldo et al, 2016 (Journal of Chemical Technology and Biotechnology, vol. 91, pages 2664-2678) proposent également d'utiliser des catalyseurs à base de nickel dans ce même but.

Sricharoenchaikul et al, 2009 (Bioresource Technology, vol. 100, pages 638-643) étudient l'influence des paramètres tels que la pression, le température, la concentration de la liqueur noire et le temps de réaction pour optimiser les rendements et l'efficacité énergétique pour maximiser l'obtention de gaz de synthèse lors de la gazéification de la liqueur noire en eau supercritique

### EXPOSÉ DE L'INVENTION

Un but de la présente invention est de proposer un procédé permettant de transformer le carbone en méthane, tout en garantissant que le soufre reste sous une forme ré-employable dans l'usine de pâte à papier, avec un minimum de pertes.

Pour cela, la présente invention propose un procédé de transformation de la liqueur noire comprenant les étapes suivantes :
a) fournir une liqueur noire,
b) réaliser une gazéification en eau supercritique de la liqueur noire, moyennant quoi on forme des produits de réaction,
c) refroidir les produits de réaction, moyennant quoi on obtient un mélange gazeux comprenant au moins du méthane et une liqueur verte comprenant au moins du soufre sous la forme NaHS, Na₂S et H₂S,
la gazéification étant réalisée en présence d'un combustible hydrogéné dépourvu de carbone.

L'invention se distingue fondamentalement de l'art antérieur par l'ajout d'un combustible hydrogéné dépourvu de carbone dans l'étape de gazéification en eau supercritique permettant d'améliorer la conversion du soufre et le fixer dans la phase aqueuse. Le soufre reste dans la phase aqueuse à plus de 80%, voire à plus de 95% molaire principalement sous la forme d'un mélange de NaHS, Na₂S et H₂S. Ce mélange est facile à réutiliser, par exemple, dans un procédé Kraft.

De plus, l'ajout de ce combustible hydrogéné particulier, non seulement, produit de chaleur mais aussi améliore la conversion du CO₂, issu de la gazéification de la liqueur noire, en méthane.

Ce combustible sert non seulement à la réaction de gazéification de la liqueur noire mais aussi permet de mettre en oeuvre de la réaction de méthanation.

Selon une première variante de réalisation, le combustible hydrogéné dépourvu de carbone est du dihydrogène (H₂). L'utilisation d'hydrogène est particulièrement avantageuse car cela n'augmente pas ou très peu les coûts du procédé. De plus, avec un tel procédé, la quantité d'hydrogène nécessaire pour produire du méthane est réduite.

Selon une deuxième variante de réalisation, le combustible hydrogéné dépourvu de carbone est de l'hydrazine (aussi appelée diazane N₂H₄).

Selon une troisième variante de réalisation, le combustible hydrogéné dépourvu de carbone est de l'ammoniac (NH₃ gazeux).

Selon un mode de réalisation particulier, l'étape b) de gazéification est réalisée sans apport d'oxydant. Il n'y a pas besoin de rajouter d'oxydant dans le réacteur de gazéification en eau supercritique pour récupérer le soufre.

Selon un autre mode de réalisation particulier, la gazéification est réalisée en présence du combustible hydrogéné dépourvu de carbone et en présence d'un oxydant. L'oxydant est, avantageusement, choisi parmi du dioxygène, H₂O₂ et des matières minérales contenant du dioxygène, par exemple des nitrates. Il pourrait également s'agir de perchlorates. Le dioxygène est avantageusement utilisé sous forme liquide.

Avantageusement, le dioxygène provient d'un électrolyseur.

Avantageusement, le rapport molaire combustible hydrogéné dépourvu de carbone/oxydant, et plus particulièrement le rapport molaire H₂/O₂, va de 2 à 10 et de préférence de 5 à 7.

Avantageusement, la température lors de l'étape de gazéification est au moins de 600°C, de préférence au moins de 700°C, par exemple entre 700°C et 800°C, et encore plus préférentiellement au moins de 800°C.

Avantageusement, la pression est au moins de 250 bar (25 MPa), par exemple entre 250 bar (25 MPa) et 350 bar (35 MPa), de préférence au moins de 300 bar (30 MPa), par exemple entre 300 et 350 bar (35 MPa), et encore plus préférentiellement au moins de 350 bar (35 MPa).

Avantageusement, la température lors de l'étape c) de refroidissement est comprise entre 25°C et 80°C et/ou la pression est comprise entre 1 (1 MPa) et 20 bars (20 MPa).

Le procédé présente plusieurs avantages :
- ne pas nécessiter l'ajout d'oxydant pour la réaction de gazéification en eau supercritique,
- produire de la chaleur en limitant la production de CO₂,
- convertir le CO₂ de la gazéification en méthane,
- fixer le soufre dans la phase aqueuse pour pouvoir le réutiliser, après le procédé de gazéification, par exemple dans un procédé Kraft,
- valoriser au maximum le carbone présent initialement dans la liqueur noire.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
La figure 1 représente, de manière schématique et en coupe, un dispositif de gazéification en eau supercritique pour de la liqueur noire, selon un mode de réalisation particulier de l'invention.
La figure 2 représente, de manière schématique et en coupe, un dispositif de gazéification en eau supercritique pour de la liqueur noire, selon un autre mode de réalisation particulier de l'invention.

Les différentes parties représentées sur les figures ne le sont pas nécessairement selon une échelle uniforme, pour rendre les figures plus lisibles.

En outre, dans la description ci-après, des termes qui dépendent de l'orientation, tels que « dessus » / « supérieure », «dessous » / « inférieure », etc. d'une structure s'appliquent en considérant que le dispositif de gazéification est orienté de la façon illustrée sur les figures.

### EXPOSÉ DÉTAILLÉ DE MODES DE RÉALISATION PARTICULIERS

Le procédé de gazéification de la liqueur noire en eau supercritique comprend les étapes suivantes :
a) fournir une liqueur noire,
b) réaliser une gazéification en eau supercritique de la liqueur noire en présence d'un combustible hydrogène dépourvu de carbone, moyennant quoi on forme des produits de réaction,
c) refroidir les produits de réaction, moyennant quoi on obtient, d'une part, un mélange gazeux comprenant au moins du méthane et, d'autre part, une liqueur verte comprenant au moins du soufre sous la forme :

   NaHS,·Na2S·et·H₂S
La liqueur noire fournie à l'étape a) contient des sels de sodium (hydroxydes et/ou sulphites) et de la matière organique (principalement de la lignine) solubilisés. D'autres sels inorganiques peuvent être présents. Par exemple, il peut s'agir de sels qui sont extraits du bois, comme le potassium (par exemple de 5 à 10 g/L) et/ou des traces (par exemple de 0,1 à 0,5 g/L) de calcium et de magnésium. La matière organique peut aussi contenir des dérivés de sucres et/ou des anions des acides carboxyliques. Ces autres composés organiques auront un effet similaire dans la gazéification.

Avantageusement, avant l'étape b) de gazéification, la liqueur noire est préchauffée (contre le refroidissement du mélange supercritique), de préférence à une température entre 300°C et 400°C, par exemple entre 300°C et 350°C. Ce préchauffage permet d'économiser de l'énergie.

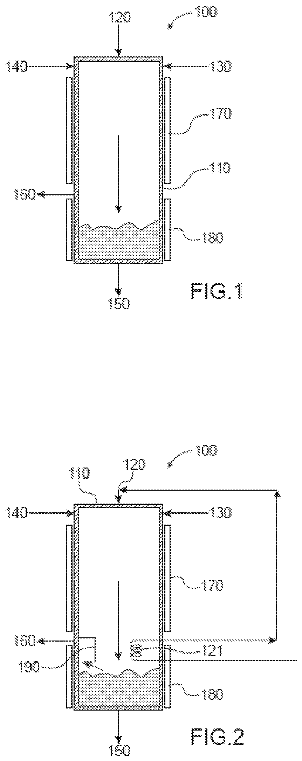

Lors de l'étape b), on réalise la gazéification de la liqueur noire en milieu supercritique dans un dispositif de gazéification 100. Comme représenté sur les figures 1 et 2, le dispositif de gazéification 100 peut comprendre un réacteur 110 muni de :
- une entrée de combustible principal 120 (la liqueur noire),
- une entrée de combustible additionnel 130, le combustible additionnel étant un combustible hydrogéné dépourvu de carbone tel que H₂, de l'ammoniac ou de l'hydrazine,
- de préférence une entrée de comburant 140, le comburant étant un oxydant pouvant être choisi parmi O₂, H₂O₂ ou un matériau minéral tel qu'un nitrate,- une sortie de liqueur verte 150, issue de la réaction de gazéification de la liqueur noire,
- une sortie de gaz 160 permettant d'évacuer un mélange gazeux.

La partie supérieure du réacteur 110 est chauffée pour pouvoir mettre en oeuvre l'étape de gazéification.

Le chauffage de la partie supérieure est réalisé par des moyens de chauffage 170 permettant de chauffer la partie supérieure du réacteur à une température comprise entre 400°C et 800°C. Il est par exemple possible d'avoir un réacteur avec une paroi double enveloppe. Le chauffage est alors obtenu par un fluide caloporteur circulant dans la paroi double enveloppe.

La partie du réacteur où a lieu la réaction de gazéification en eau supercritique (partie en conditions supercritiques) a, par exemple, un volume d'environ 1 m3.

Pour une capacité plus importante, on utilisera, avantageusement, un chauffage additionnel, positionné à l'extérieur de la capacité.

L'entrée de liqueur noire 120 est, avantageusement, positionnée dans la partie supérieure du réacteur.

Selon une variante de réalisation, la ligne d'alimentation en liqueur noire peut passer dans le réacteur 110 par exemple, sous la forme d'un serpentin 121 avant de déboucher dans le réacteur 110 (figure 2).

L'entrée de comburant 140 et l'entrée de combustible additionnel 130 sont positionnées dans la partie supérieure du réacteur 110.

L'entrée de comburant 140 peut être reliée à un électrolyseur, produisant du dioxygène et positionné en amont du réacteur 110.

La partie inférieure du réacteur est à une température inférieure à celle de la partie supérieure (typiquement à une température inférieure à celle de l'eau à l'état supercritique) pour refroidir les produits de réaction de manière à, d'une part, solubiliser la matière minérale, sous forme de saumure (liqueur verte), et, d'autre part, obtenir un mélange gazeux.

La partie inférieure est refroidie avec des moyens de refroidissement 180 permettant de refroidir la zone inférieure du réacteur à une température inférieure à 374°C. Par exemple, le refroidissement peut être obtenu grâce à la circulation d'un fluide caloporteur dans la paroi double enveloppe d'un réacteur.

Le volume de la partie inférieure où a lieu le refroidissement (partie en conditions sous-critiques) est, par exemple, inférieur au volume de la partie en conditions supercritiques.

La sortie du mélange gazeux et la sortie de la liqueur verte sont, avantageusement, positionnés dans la partie inférieure du réacteur.

Avantageusement, comme représenté sur la figure 2, le dispositif 100 comprend des moyens de guidage 190 positionnés entre la partie supérieure et la partie inférieure pour faciliter l'évacuation des gaz.

Le réacteur comprend également des moyens de régulation de la pression (non représentés) pour maintenir l'ensemble du réacteur à une pression supérieure ou égale à 22,1 MPa, par exemple allant de 22,1 MPa à 40,0 MPa.

Le dispositif de gazéification peut également comprendre des équipements et des instruments pour réguler automatiquement la pression du réacteur jusque 40,0 MPa voire plus, et pour assurer la dépressurisation du flux sortant, pour une pression en aval allant par exemple de 0,1 à 0,5 MPa absolus.

Le dispositif peut également comprendre des équipements de sécurité, comme des soupapes par exemple.

La paroi du réacteur est en un matériau thermiquement conducteur et supportant la pression. Par exemple, la paroi peut être en Inconel (par exemple un alliage nickel-chrome 625).

Le dispositif peut également comprendre des vannes d'arrêt pour ouvrir/fermer les lignes de réactifs ou de produits.

Un châssis, non représenté, peut être utilisé pour supporter l'ensemble.

Le réacteur peut comprendre une séparation de tenue en pression (parois froide) et/ou une paroi intérieure transpirante (« transpiring wall »).

Le réacteur pourrait être relié à un échangeur horizontal pour condenser l'eau.

Un électrolyseur peut être positionné en amont du réacteur, pour fournir le réacteur en oxygène et en hydrogène.

Le réacteur peut être, par exemple, un réacteur vertical de type tubulaire.

L'étape b) de gazéification est réalisée dans des conditions de température et de pression telles que l'eau est à l'état supercritique. Par eau à l'état supercritique, on entend de l'eau qui est au-delà de son point critique, c'est-à-dire chauffée à une température supérieure à 374°C et à une pression supérieure à 221 bar (22,1 MPa).

De préférence, lors de l'étape b), la température est d'au moins 600°C, de préférence d'au moins 700°C ou de manière encore plus préférentielle d'au moins 800°C. La pression est d'au moins 250 bar (25 MPa), et de préférence d'au moins 300 (30 MPa) voire d'au moins 350 bar (35 MPa).

L'étape de gazéification est réalisée en présence d'un combustible hydrogéné dépourvu de carbone (i.e. un combustible ne contenant pas d'atome de carbone et contenant au moins un atome d'hydrogène). Par exemple, il peut s'agir de H₂, N₂H₄ ou NH₃. De préférence il s'agit de dihydrogène.

Avantageusement, l'étape de gazéification est également réalisée en présence d'un oxydant. De préférence, l'oxydant est du dioxygène.

Avantageusement, lors de la gazéification, un flux de combustible hydrogéné dépourvu de carbone, et éventuellement un flux d'oxydant, circulent dans la capacité avec un débit allant par exemple de 0,1 à 5 L/s. Par exemple, le débit est de 1L/s.

De préférence, lors de l'étape b), seule la liqueur noire est gazéifiée. Alternativement, d'autres sources carbonées peuvent être présentes lors du procédé de gazéification comme des boues de station d'épuration, ou des eaux polluées avec des hydrocarbures.

Lors de la gazéification, la matière organique se décompose, et se gazéifie pour produire de l'hydrogène, du méthane, du dioxyde de carbone et du monoxyde de carbone. Le soufre se transforme en H₂S.

La matière inorganique précipite, sous forme de sels, dans la zone supérieure du réacteur et tombe par gravité dans la partie inférieure du réacteur, plus froide, où elle est resolubilisée et où elle peut être évacuée.

Les produits de réaction sont ainsi refroidis (étape c) et on obtient d'une part un mélange gazeux et d'autre part une liqueur verte.

Le mélange gazeux contient du méthane, du dioxyde de carbone, du dihydrogène et du sulfure d'hydrogène.

La liqueur verte est un mélange d'eau et de sels de cuisson. La liqueur verte comprend du soufre sous la forme NaHS, Na₂S et H₂S.

La liqueur verte a, par exemple, un pH compris entre 8,5 et 11,9.

Avantageusement, la liqueur verte est ultérieurement transformée en liqueur blanche. La transformation peut, par exemple, comprendre une étape au cours de laquelle on ajoute de l'hydroxyde de calcium pour former du carbonate de calcium et de la soude.

Avantageusement, le procédé est réalisé sans catalyseur.

La présente invention est particulièrement intéressante pour les usines de pâte à papier en remplacement ou en complément du procédé de combustion de la liqueur noire. En effet, la combustion, même très optimisée conduit à des pertes de sodium et de soufre (SO₂, SO₃ et sulfate de sodium). La présente invention conduit à une récupération efficace du sodium et du soufre de l'usine à pâte à papier. De plus, avec ce procédé de gazéification en eau supercritique, une grande partie du carbone initialement présent dans la liqueur noire est rejeté sous forme de méthane. Le méthane produit peut être injecté dans le réseau de gaz de ville. Les gaz de synthèse produits sont utilisables pour synthétiser des bio-carburants.

En particulier, la présente invention est particulièrement intéressante pour la filière « Power to Gaz » dans laquelle on produit de l'hydrogène par électrolyse, avec un excédent de puissance électrique. L'hydrogène ainsi obtenu peut ensuite être combiné avec du CO₂ directement issu de la gazéification pour le valoriser sous la forme de méthane.

### Exemples illustratifs et non limitatifs d'un mode de réalisation :

Les liqueurs noires issues du procédé Kraft peuvent avoir une composition très variable. Pour les calculs qui vont suivre, la composition de la liqueur noire utilisée est répertoriée dans le tableau suivant :

| | |
|---|---|
| Concentration matière sèche de la Liqueur Noire (LN) | 200 g/L |
| Dont Inorganique (NaOH, Na₂S) | 120 g/L |
| Dont Organique | 80 g/L |
| Carbone | 5 mol/L |
| Hydrogène (hors eau) | 8 mol/L |
| Oxygène (hors eau) | 1 mol/L |
| Azote | 0,1 mol/L |
| Soufre | 0,3 mol/L |
| PCS (matière organique) | 30 MJ/kg |

L'acronyme PCS correspondant au pouvoir calorifique supérieur.

Le dispositif 100 de gazéification en eau supercritique utilisé est, par exemple, celui représenté sur l'une des figures 1 ou 2.

Le mélange réactionnel formé de la liqueur noire est introduit dans le réacteur.

La liqueur noire est, dans un premier temps, pressurisée à 300 bar et préchauffée à 600 K (327°C).

Puis, la gazéification se fait à 1073 K (800°C).

Après la gazéification, le réacteur est refroidi. En refroidissant, les gaz se condensent. Le CO₂ et le H₂S vont se répartir entre la phase condensée et la phase gaz. Le CO₂ produit un acide plus fort que le H₂S et va donc empêcher le H₂S de se fixer dans l'eau.

La même expérience a été reproduite en ajoutant de l'oxygène, de l'hydrogène ou de l'oxygène et de l'hydrogène dans le réacteur de gazéification.

Dans le cas de l'ajout d'oxygène et d'hydrogène, deux pressions différentes (1 bar et 20 bar) et deux températures différentes (300 k et 350 K) ont été utilisées pour les conditions de séparation.

Les résultats sont donnés dans le tableau suivant :

| **Cas 1L/sec** | **LN seul** - **réf** | **LN+O₂** | **LN+O₂+H₂** | **LN+O₂+H₂** | **LN** + **H₂** | **LN** + **O₂** + **H₂** | **LN** + **O₂** + **H₂** |
|---|---|---|---|---|---|---|---|
| Besoin O₂ (mol/s) | 0 | 1.84 | 1.68 | 1.68 | 0 | 1.68 | 1,68 |
| Besoin H₂ (mol/s) | 0 | 0 | 10 | 10 | 10 | 10 | 10 |
| Puissance Electrique (MW) | 2 | 0 | 0 | 0 | 3.4 | 0 | 0 |
| | | | | | | | |

| **Gaz gazéification (mol/s)** | | | | | | | |
|---|---|---|---|---|---|---|---|
| CO | 0 | 0 | 0 | 0 | 0 | 0 | 0 |
| CO₂ | 2.52 | 3.36 | 1.23 | 1,23 | 0.60 | 1.23 | 1,23 |
| H₂ | 2.83 | 2.49 | 46.2 | 46.2 | 5.13 | 46.2 | 46.2 |
| CH₄ | 2.46 | 1.62 | 3.75 | 3.75 | 4.39 | 3.75 | 3.75 |
| H₂S | 0.3 | 0.3 | 0.3 | 0.3 | 0.3 | 0.3 | 0.3 |
| | | | | | | | |

| **Sels dans l'eau (mol/s)** | | | | | | | |
|---|---|---|---|---|---|---|---|
| Condition de séparation | 300 K, 1 bar | 300 K, 1 bar | 300 K, 1 bar | 350 K, 20 bar | 300 K, 1 bar | 350 K, 1 bar | 300 K, 20 bar |
| pH | 8.82 | 8.58 | 9.63 | 9.02 | 11,85 | 9.72 | 8.90 |
| NaOH | 5E-6 | 3E-6 | 4 E-5 | 5E-6 | 0.006 | 4E-5 | 6E-6 |
| NaHCO₃ | 1.27 | 1.34 | 0.92 | 1,06 | 0.02 | 0.72 | 1,13 |
| NaCO₃ | 0.036 | 0.021 | 0.17 | 0.077 | 0.58 | 0.17 | 0,04 |
| NaHS | 0.155 | 0.12 | 0.25 | 0.287 | 0.29 | 0.26 | 0.28 |
| Na₂S | 4E-6 | 2E-6 | 5 E-5 | 4E-4 | 0.009 | 0.002 | 0.00001 |
| H₂S(aq) | 0.002 | 0,003 | 0.0004 | 0.0008 | 0.002 | 0.00015 | 0.0028 |
| Sₜₒₜ | 0.15 | 0.12 | 0.25 | 0.29 | 0.3 | 0.26 | 0.28 |

| **Gaz froid (mol/s)** | | | | | | | |
|---|---|---|---|---|---|---|---|
| CO₂ | 1.21 | 1.99 | 0.15 | 0.092 | 1.21 | 0.25 | 0,05 |
| H₂S | 0.143 | 0.15 | 0.046 | 0.011 | 0.0003 | 0.046 | 0.013 |
| H₂ | 2.83 | 2.49 | 4.28 | 4,25 | 5.13 | 4.28 | 4,25 |
| CH₄ | 2.46 | 1.62 | 3.75 | 3.75 | 4.39 | 3.75 | 3,75 |

Dans le tableau précédent, Sₜₒₜ correspond à la somme de Na₂S + NaHS + H₂S.

Dans le procédé dit de référence (sans ajout de dihydrogène et/ou de dioxygène), le besoin en chauffage supplémentaire, avant l'étape de gazéification, est d'environ de 2 MJ par litre de liqueur noire.

En ajoutant de l'oxygène uniquement, une partie de la ressource est consommé pour produire de la chaleur. On observe que la production d'hydrogène et méthane est réduite.

En ajoutant de l'oxygène et de l'hydrogène, la chaleur est fournie par la consommation d'hydrogène. Le PCI important de l'hydrogène conduit à une baisse de la consommation d'oxygène. Une partie importante de l'hydrogène est consommée par la réaction de méthanation avec le CO₂. La quantité de dioxyde de carbone à la fin du procédé est plus faible et la quantité de méthane produite est plus importante que dans le cas où seulement de l'oxygène est ajouté.

En ajoutant du dihydrogène seul, les résultats sont encore meilleurs.

En augmentant la pression lors de l'étape de séparation, plus de soufre est fixé dans la phase aqueuse (la solubilité de H₂S est favorisée).

En augmentant la température, le pH augmente légèrement et plus de soufre est également fixé dans la phase aqueuse.

Dans le cas auto-thermique avec ajout d'oxygène seul et avec ajout d'oxygène et d'hydrogène, la consommation est de 5,72 moles d'hydrogène par seconde, 4,38 moles de H₂ sort du réacteur sans être consommé et permet, avantageusement, de pousser l'équilibre de la réaction dans le sens réactifs --> produits. La gazéification de la liqueur noire produit aussi du H₂. Pour produire 3,75 moles de CH₄ comme observé, on consomme donc 1,5 moles d'hydrogène par mole de CH₄ produit. Le reste vient donc de la liqueur noire. A titre comparatif, dans une réaction de méthanation classique, on consomme 4 moles d'hydrogène.

De plus, cela permet de chauffer le réacteur et d'obtenir le soufre en phase aqueuse.

Le sodium est présent dans la phase aqueuse sous une forme facile à réutiliser, principalement comme NaHS et Na₂S. Il est donc possible de le recycler efficacement. Il n'y aura pas ou très peu de perte de soufre (sous forme de dioxyde de soufre ou de sulfates) dans ce procédé.

### ANNEXE

[1] Cao, W., et al., Assessment of sugarcane bagasse gasification in supercritical water for hydrogen production. International Journal of Hydrogen Energy, 2018. 43(30): p. 13711-13719.

[2] Lunde, P.J. and F.L. Kester, Carbon Dioxide Methanation on a Ruthénium Catalyst. Industrial & Engineering Chemistry Process Design and Development, 1974. 13(1): p. 27-33.

[3] Frusteri, F., et al., Methane production by sequentiol supercritical gasification of aqueous organic compounds and sélective CO2 methanation. Applied Catalysis A: General, 2017. 545: p. 24-32.

[4] Hong, G.T. and M.H. Spritzer, Supercritical Water Partial Oxydation, in Proceedings of the 2002 U.S. DOE Hydrogen Program Review 2002

## Revendications

1. Procédé de transformation de la liqueur noire comprenant les étapes suivantes :
a) fournir une liqueur noire,
b) réaliser une gazéification en eau supercritique de la liqueur noire, moyennant quoi on forme des produits de réaction,
c) refroidir les produits de réaction, moyennant quoi on obtient un mélange gazeux comprenant au moins du méthane et une liqueur verte comprenant au moins du soufre sous la forme NaHS, Na₂S et H₂S,
**caractérisé en ce que** la gazéification est réalisée en présence d'un combustible hydrogéné dépourvu de carbone.

2. Procédé selon la revendication 1, **caractérisé en ce que** le combustible hydrogéné dépourvu de carbone est du dihydrogène.

3. Procédé selon la revendication 1, **caractérisé en ce que** le combustible hydrogéné dépourvu de carbone est de l'hydrazine.

4. Procédé selon la revendication 1, **caractérisé en ce que** le combustible hydrogéné dépourvu de carbone est de l'ammoniac.

5. Procédé selon l'une quelconque des revendications précédentes, **caractérisé en ce que** la gazéification est réalisée en présence du combustible hydrogéné et d'un oxydant.

6. Procédé selon la revendication précédente, **caractérisé en ce que** l'oxydant est du dioxygène, H₂O₂ ou une matière minérale comme un nitrate.

7. Procédé selon l'une des revendications 5 et 6, **caractérisé en ce que** le rapport molaire combustible hydrogéné dépourvu de carbone/oxydant va de 2 à 10 et de préférence de 5 à 7.

8. Procédé selon l'une quelconque des revendications précédentes, **caractérisé en ce que** la température lors de l'étape b) de gazéification est au moins de 600°C, de préférence entre 700°C et 800°C.

9. Procédé selon l'une quelconque des revendications précédentes, **caractérisé en ce que** la pression lors de l'étape b) de gazéification est au moins de 25 MPa, de préférence entre 25 MPa et 350 MPa et encore plus préférentiellement entre 300 MPa et 350 MPa.

10. Procédé selon l'une quelconque des revendications précédentes, **caractérisé en ce que** le refroidissement lors de l'étape c) est réalisée à une température comprise entre 25°C et 80°C et/ou **en ce que** la pression est comprise entre 1 et 20 MPa.

## Patentansprüche

1. Verfahren zur Verarbeitung von Schwarzlauge, das die folgenden Schritte umfasst:
a) Bereitstellen eines schwarzen Likörs
b) Durchführen einer Vergasung der Schwarzlauge in überkritischem Wasser, wodurch Reaktionsprodukte gebildet werden,
c) Abkühlen der Reaktionsprodukte, wobei eine gasförmige Mischung erhalten wird, die mindestens Methan und eine Grünlauge umfasst, die mindestens Schwefel in der Form von NaHS, Na₂S und H₂S umfasst,
**dadurch gekennzeichnet, dass** die Vergasung in Gegenwart eines kohlenstofffreien, hydrierten Brennstoffs durchgeführt wird.

2. Verfahren nach Anspruch 1, **dadurch gekennzeichnet, dass** der kohlenstofffreie hydrierte Brennstoff Dihydrogen ist.

3. Verfahren nach Anspruch 1, **dadurch gekennzeichnet, dass** der kohlenstofffreie hydrierte Brennstoff Hydrazin ist.

4. Verfahren nach Anspruch 1, **dadurch gekennzeichnet, dass** der kohlenstofffreie hydrierte Brennstoff Ammoniak ist.

5. Verfahren nach einem der vorstehenden Ansprüche, **dadurch gekennzeichnet, dass** die Vergasung in Gegenwart des hydrierten Brennstoffs und eines Oxidationsmittels durchgeführt wird.

6. Verfahren nach dem vorstehenden Anspruch, **dadurch gekennzeichnet, dass** das Oxidationsmittel Sauerstoff, H₂O₂ oder ein Mineralstoff wie Nitrat ist.

7. Verfahren nach einem der Ansprüche 5 oder 6, **dadurch gekennzeichnet, dass** das Molverhältnis von kohlenstofffreiem hydriertem Brennstoff zu Oxidationsmittel 2 bis 10 und vorzugsweise 5 bis 7 beträgt.

8. Verfahren nach einem der vorstehenden Ansprüche, **dadurch gekennzeichnet, dass** die Temperatur in Schritt b) der Vergasung mindestens 600°C, vorzugsweise zwischen 700°C und 800°C, beträgt.

9. Verfahren nach einem der vorstehenden Ansprüche, **dadurch gekennzeichnet, dass** der Druck in Schritt b) der Vergasung mindestens 25 MPa, vorzugsweise zwischen 25 MPa und 350 MPa und noch bevorzugter zwischen 300 MPa und 350 MPa beträgt.

10. Verfahren nach einem der vorstehenden Ansprüche, **dadurch gekennzeichnet, dass** die Kühlung in Schritt c) bei einer Temperatur zwischen 25°C und 80°C durchgeführt wird und/oder der Druck zwischen 1 und 20 MPa liegt.

## Claims

1. A method for transforming a black liquor comprising the following steps:
a) supplying a black liquor,
b) carrying out a supercritical water gasification of the black liquor, whereby reaction products are formed,
c) cooling the reaction products, whereby a gaseous mixture is obtained comprising at least methane and a green liquor comprising at least sulphur in the form of NaHS, Na₂S and H₂S,
**characterised in that** the gasification is carried out in the presence of a carbon-free hydrogenated fuel.

2. The method according to claim 1, **characterised in that** the carbon-free hydrogenated fuel is dihydrogen.

3. The method according to claim 1, **characterised in that** the carbon-free hydrogenated fuel is hydrazine.

4. The method according to claim 1, **characterised in that** the carbon-free hydrogenated fuel is ammonia.

5. The method according to any one of the preceding claims, **characterised in that** the gasification is carried out in the presence of the hydrogenated fuel and of an oxidant.

6. The method according to the preceding claim, **characterised in that** the oxidant is dioxygen, H₂O₂ or a mineral matter like a nitrate.

7. The method according to one of claims 5 and 6, **characterised in that** the carbon-free hydrogenated fuel/oxidant molar ratio ranges from 2 to 10 and preferably from 5 to 7.

8. The method according to any one of the preceding claims, **characterised in that** the temperature during the gasification step b) is at least 600°C, preferably between 700°C and 800°C.

9. The method according to any one of the preceding claims, **characterised in that** the pressure during the gasification step b) is at least 25 MPa, preferably between 25 MPa and 350 MPa and even more preferably between 300 MPa and 350 MPa.

10. The method according to any one of the preceding claims, **characterised in that** the cooling during step c) is carried out at a temperature comprised between 25°C and 80°C and/or **in that** the pressure is comprised between 1 and 20 MPa.
